# EUROPÄISCHE PATENTSCHRIFT

(11) **EP 2 748 760 B1**
(45) Veröffentlichungstag und Bekanntmachung des Hinweises auf die Patenterteilung: **18.05.2022**
(21) Anmeldenummer: 12737739.8
(22) Anmeldetag: 03.07.2012
(51) Int. Cl.: G06V 20/58, G06V 20/56

(54) **VERFAHREN ZUR SCHÄTZUNG EINES STRAßENVERLAUFS UND VERFAHREN ZUR STEUERUNG EINER LICHTAUSSENDUNG ZUMINDEST EINES SCHEINWERFERS EINES FAHRZEUGS**
METHOD FOR ESTIMATING A ROAD COURSE AND METHOD FOR CONTROLLING A LIGHT EMISSION OF AT LEAST ONE HEADLAMP OF A VEHICLE
PROCÉDÉ D'ESTIMATION D'UN TRACÉ DE ROUTE ET PROCÉDÉ DE COMMANDE DE L'ÉMISSION DE LUMIÈRE D'AU MOINS UN PHARE DE VÉHICULE

(30) Priorität: 23.08.2011 DE 102011081397
(43) Veröffentlichungstag der Anmeldung: 02.07.2014
(73) Patentinhaber: Robert Bosch GmbH, 70442 Stuttgart (DE)
(72) Erfinder: FABER, Petko, 71272 Renningen (DE); FOLTIN, Johannes, 71254 Ditzingen (DE); SCHWARZENBERG, Gregor, 75365 Calw (DE)
(86) Internationale Anmeldenummer: PCT/EP2012/062923
(87) Internationale Veröffentlichungsnummer: WO 2013/026609

(56) Entgegenhaltungen:
- EP-A1- 2 040 196
- EP-A2- 1 400 916
- EP-A2- 2 116 958
- JP-A- 11 203 458
- SHOICHI SHIMIZU ET AL: "Recognition of Road Contours Based on Extraction of 3D Positions of Delineators", INTELLIGENT TRANSPORTATION SYSTEMS CONFERENCE, 2007. ITSC 2007. IEEE, IEEE, PI, 1. September 2007 (2007-09-01), Seiten 672-677, XP031151496, ISBN: 978-1-4244-1395-9
- SMUDA VONZ TRZEBIATOWSKI M ET AL: "Detecting reflection posts - lane recognition on country roads", INTELLIGENT VEHICLES SYMPOSIUM, 2004 IEEE PARMA, ITALY JUNE 14-17, 2004, PISCATAWAY, NJ, USA,IEEE, 14. Juni 2004 (2004-06-14), Seiten 304-309, XP010727486, DOI: 10.1109/IVS.2004.1336399 ISBN: 978-0-7803-8310-4
- UWE-PHILIPP KÄPPELER: "Erkennung und Verfolgung von Leitpfosten zur Spurprädiktion", DIPLOMARBEIT UNIVERSITAET STUTTGART, XX, XX, 30. September 2003 (2003-09-30), Seite complete, XP002461061,

## Beschreibung

### Stand der Technik

Die vorliegende Erfindung bezieht sich auf ein Verfahren zur Schätzung eines Straßenverlaufs in einem Straßenabschnitt in Fahrtrichtung vor einem Fahrzeug, auf ein Verfahren zur Steuerung einer Lichtaussendung zumindest eines Scheinwerfers eines Fahrzeugs sowie auf Vorrichtungen, die ausgebildet sind, um die Schritte eines solchen Verfahrens durchzuführen.

Bei Nacht ist die Sichtweite im Straßenverkehr üblicherweise stark eingeschränkt. Scheinwerfer leuchten normalerweise geradeaus. Um die Sichtweite in Kurven zu erhöhen, wurde Kurvenlicht eingeführt. Beim klassischen Kurvenlicht werden Daten der Inertialsensorik ausgewertet, z. B. Lenkwinkel, Gierrate und Geschwindigkeit, um den gefahrenen Kurvenradius zu schätzen und demnach das Kurvenlicht in die gefahrene Kurve zu lenken. Das klassische Kurvenlicht wertet somit die aktuelle Trajektorie des Fahrzeugs aus, wodurch das Kurvenlicht basierend auf Daten der Vergangenheit regelt. In Kurveneingängen und Kurvenausgängen sowie Wechselkurven bzw. S-Kurven kann dies Probleme bereiten, da hier nicht von dem vergangenen oder gegenwärtigen auf den zukünftigen Straßenverlauf geschlossen werden kann. Teilweise leuchtet das Kurvenlicht deshalb in die falsche Richtung.

Die DE 10 2007 012 834 A1 betrifft ein Verfahren zur Realisierung einer Kurvenlichtfunktion eines Fahrzeugscheinwerfers.

Die EP 2 116 958 A2 offenbart ein Verfahren und eine Vorrichtung zum Ermitteln des Fahrbahnverlaufs im Bereich vor einem Fahrzeug.

In SHOICHI SHIMIZU ET AL: "Recognition of Road Contours Based on Extraction of 3D Positions of Delineators", Intelligent Transportation Systems Conference, 2007, (ITSC 07), IEEE, PI, 1. September 2007, Seiten 672-677, XP031151496, ISBN: 978-1-4244-1395-9 ist eine Erkennung von Straßenkonturen basierend auf einer Extraktion von 3D-Positionen von Leitpfosten gezeigt.

In SMUDA VON TRZEBIATOWSKI M ET AL: "Detecting reflection posts - lane recognition on country roads", IEEE Intelligent Vehicles Symposium, Parma, Italy, JUNE 14-17, 2004, Piscataway, NJ, USA, IEEE, 14. Juni 2004, Seiten 304-309, XP010727486, 001: 10.11 09/IVS.2004.1336399 ISBN: 978-0-7803-8310-4 ist ein Erfassen von reflektierenden Pfosten zur Fahrspurerkennung auf Landstraßen beschrieben.

Die EP 2 040 196 A1 offenbart eine Straßenform-Schätzvorrichtung.

Die JP 11 203458 A beschreibt eine Straßenform-Erkennungsvorrichtung.

Die EP 1 400 916 A2 betrifft eine bordeigene Bildverarbeitungsvorrichtung.

In der Diplomarbeit an der Universität Stuttgart, 30. September 2003, XP002461061, von Uwe-Philipp Käppeler ist eine "Erkennung und Verfolgung von Leitpfosten zur Spurprädiktion" offenbart.

### Offenbarung der Erfindung

Vor diesem Hintergrund werden mit der vorliegenden Erfindung ein verbessertes Verfahren zur Schätzung eines Straßenverlaufs in einem Straßenabschnitt in Fahrtrichtung vor einem Fahrzeug, ein verbessertes Verfahren zur Steuerung einer Lichtaussendung zumindest eines Scheinwerfers eines Fahrzeugs, eine verbesserte Vorrichtung und ein verbessertes Computer-Programmprodukt gemäß den Hauptansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass ein Straßenverlauf über von zumindest einem reflektierenden oder selbstleuchtenden Objekt erzeugte Lichtpunkte in einem Bild der Straße bei Dunkelheit geschätzt werden kann. Der geschätzte Straßenverlauf kann beispielsweise dann zur Ansteuerung von Fahrerassistenzsystemen und dergleichen, wie z. B. Kurvenlicht verwendet werden. Die Schätzung kann mittels eines geeigneten Detektionsalgorithmus erfolgen, beispielsweise mittels VDD (Vehicle Detection in Darkness; auch FDD = Fahrzeugdetektion bei Dunkelheit genannt). VDD ist beispielsweise ausgebildet, um andere Verkehrsteilnehmer, Straßenlaternen und Reflektoren als Objekte zu erkennen und zu klassifizieren. Der Straßenverlauf wird beispielsweise anhand von Objektpositionen bzw. Messergebnissen eines Detektionsalgorithmus geschätzt. Basierend darauf können Fahrerassistenzsystem, wie zum Beispiel das Kurvenlicht angesteuert werden. Der geschätzte Straßenverlauf wird somit beispielsweise genutzt, um das Kurvenlicht anzusteuern.

Ein Vorteil der vorliegenden Erfindung liegt darin, dass eine bildbasierte bzw. videobasierte Möglichkeit geschaffen ist, vorausschauend den Straßenverlauf bzw. Kurvenverlauf zu erkennen und beispielsweise das Kurvenlicht entsprechend auszurichten. Es ist möglich, eine Reichweite bei einer vorausschauenden Schätzung des Straßenverlaufs bzw. Spurverlaufs zu vergrößern. Somit steigen Verkehrssicherheit sowie Fahrkomfort, da beispielsweise Kurvenlicht weit vorausschauend an den möglichst korrekt geschätzten Straßenverlauf angepasst werden kann. Zudem ist dies unter Verwendung lediglich einer Fahrzeugkamera oder dergleichen möglich, ohne dass ein Navigationsgerät oder Ähnliches vorhanden sein braucht, so dass die Schätzung des Straßenverlaufs kostengünstig und Platz sparend erfolgen kann.

Die vorliegende Erfindung ist entsprechend des ersten Anspruchs definiert.

Bei dem Fahrzeug kann es sich um ein Kraftfahrzeug, beispielsweise einen Personenkraftwagen, einen Lastkraftwagen oder eine Nutzfahrzeug handeln. Bei dem zumindest einen Scheinwerfer kann es sich beispielsweise um einen Frontscheinwerfer zur Fahrbahnausleuchtung handeln. Der zumindest eine Scheinwerfer kann eine Scheinwerfereinheit aufweisen, die mehrere Scheinwerfermodule oder dergleichen umfasst. Das Bild des Straßenabschnitts kann von einer Bilderfassungseinrichtung des Fahrzeugs erfasst worden sein. Das Bild kann dabei von einer Fahrzeugkamera aufgenommen worden sein. Dabei kann eine Blickrichtung der Fahrzeugkamera einer momentanen Fahrtrichtung des Fahrzeugs entsprechen. Das zumindest eine reflektierende oder selbstleuchtende Objekt kann beispielsweise ein Reflektor eines Leitpfostens, ein Verkehrszeichen, eine Fahrbahnmarkierung, ein Leuchtmittel einer eingeschalteten Straßenlaterne, Warnleuchte oder sonstigen Straßenbeleuchtung, ein Scheinwerfer eines Fremdfahrzeuges oder dergleichen sein. Dabei kann das Objekt von einem Scheinwerfer des Fahrzeugs oder eines Fremdfahrzeugs oder einer anderen Lichtquelle beleuchtet sein und daher reflektierend sein, wie beispielsweise ein Leitpfosten bzw. dessen Reflektor. Ein reflektierendes Objekt kann dabei einen zur Lichtreflexion ausgebildeten Reflektor oder eine sich farblich oder auf sonstige Weise in einem Reflexionsvermögen von einer Umgebung unterscheidende Fläche repräsentieren. Das zumindest eine reflektierende oder selbstleuchtende Objekt kann sich dabei entlang des Straßenverlaufs auf, neben oder über der Straße befinden. Daher kann nach der Ermittlung der Position des zumindest einen Objekts der Straßenverlauf geschätzt oder auf andere geeignete Art und Weise bestimmt werden.

Es kann im Schritt des Erkennens eine Mehrzahl von selbstleuchtenden Objekten in dem Bild des Straßenabschnitts erkannt werden. Dabei können im Schritt des Ermittelns Positionen der Mehrzahl von Objekten basierend auf dem Bild des Straßenabschnitts ermittelt werden. Auch kann im Schritt des Schätzens der Straßenverlauf unter Verwendung der ermittelten Positionen der Mehrzahl von Objekten geschätzt werden. Die Mehrzahl von selbstleuchtenden Objekten kann sich dabei entlang des Straßenverlaufs, insbesondere auf, neben oder über der Straße befinden. Beispielsweise kann es sich bei der Mehrzahl von Objekten um Scheinwerfer einer Fahrzeugkolonne, oder dergleichen handeln. Eine solche Ausführungsform bietet den Vorteil, dass basierend auf der Mehrzahl von Objekten der Straßenverlauf zuverlässiger und korrekter geschätzt werden kann.

Gemäß einer Ausführungsform kann im Schritt des Erkennens das zumindest eine Objekt in einer Mehrzahl von Bildern des Straßenabschnitts erkannt werden. Dabei kann im Schritt des Ermittelns ein Verlauf einer Position des zumindest einen Objekts basierend auf der Mehrzahl von Bildern des Straßenabschnitts ermittelt werden. Auch kann im Schritt des Schätzens der Straßenverlauf unter Verwendung des ermittelten Verlaufs der Position des zumindest einen Objekts geschätzt werden. Von dem Verlauf bzw. einer Veränderung der Position des zumindest einen Objekts von Bild zu Bild kann eine Bewegung und/oder eine Bewegungsrichtung des zumindest einen Objekts hergeleitet werden. Dabei kann auch eine Eigenbewegung des Fahrzeugs berücksichtigt werden. Bei der Mehrzahl von Bildern des Straßenabschnitts kann es sich um aufeinanderfolgende Bilder des Straßenabschnitts bzw. in einem definierbaren zeitlichen Abstand aufgenommene Bilder des Straßenabschnitts handeln. Eine solche Ausführungsform bietet den Vorteil, dass basierend auf der Mehrzahl von Bildern der Straßenverlauf zuverlässiger und korrekter geschätzt werden kann.

Auch kann im Schritt des Ermittelns ein sich aufgrund einer Belichtungszeit des Bildes ergebender Verlauf einer Position des zumindest einen Objekts basierend auf dem Bild des Straßenabschnitts ermittelt werden. Dabei kann im Schritt des Schätzens der Straßenverlauf unter Verwendung des ermittelten Verlaufs der Position des zumindest einen Objekts geschätzt werden. Hierbei kann das Bild mittels Langzeitbelichtung aufgenommen sein. Die Belichtungszeit des Bildes kann relativ zu einer für Standbildkameras typischen Belichtungszeit erhöht bzw. verlängert sein. Wenn sich ein Objekt in dem Bild während der Belichtungszeit bewegt, entsteht eine Spur dieser Bewegung in dem Bild, wobei diese Spur dem Verlauf der Position entspricht. Eine solche Ausführungsform bietet den Vorteil, dass basierend auf einem Bild mit einer solchen Belichtungszeit Der Straßenverlauf zuverlässiger und korrekter geschätzt werden kann.

Dabei kann im Schritt des Erkennens das zumindest eine Objekt mittels Bildverarbeitung in dem Bild des Straßenabschnitts erkannt werden. Auch kann im Schritt des Ermittelns eine Position des zumindest einen Objekts in dem Bild des Straßenabschnitts ermittelt werden. Das Bild kann mittels der Bildverarbeitung bzw. einer Bildauswertung analysiert werden, um das zumindest eine selbstleuchtende Objekt zu erkennen und/oder um die Position des zumindest einen Objekts zu ermitteln. Dabei wird auch eine Objekterkennung,

Mustererkennung oder dergleichen zum Einsatz kommen. Es werden Helligkeitswerte in dem Bild ausgewertet. Dabei werden Bildbereiche mit Helligkeitswerten über einem definierbaren Schwellenwert als Objekte erkannt.

Von der Position in dem Bild kann eine reale Position relativ zu dem Fahrzeug hergeleitet werden. Zusätzlich oder alternativ kann die hergeleitete reale Position mittels geeigneter Sensorik überprüft werden, beispielsweise mittels Radar. Eine solche Nutzung der Bildverarbeitung bietet den Vorteil, dass auf sensormäßig unaufwendige Weise und günstigerweise unter Verwendung gegebenenfalls bereits vorhandener Hardware und/oder Software der Straßenverlauf geschätzt werden kann. Dies kann Kosten und Platz sparen.

Das Verfahren kann einen Schritt des Kombinierens des geschätzten Straßenverlaufs mit einem erfassten Verlauf einer Fahrbahnmarkierung des Straßenabschnitts umfassen, um einen plausibilisierten Straßenverlauf zu erzeugen. Vorteilhafterweise kann eine Fahrbahnmarkierung, die beispielsweise einen Verlauf einer Fahrspur anzeigt, auch bei Helligkeit sicher erkannt werden.

Ferner kann ein Schritt des Kombinierens des geschätzten Straßenverlaufs mit Fahrtdaten und/oder Positionsdaten des Fahrzeugs vorgesehen sein, um einen plausibilisierten Straßenverlauf zu erzeugen. Die Fahrtdaten können Sensordaten, beispielsweise Inertialsensordaten, bezüglich eines Lenkwinkels, einer Gierrate, einer Geschwindigkeit und dergleichen des Fahrzeugs umfassen. Die Fahrtdaten zur Verwendung bei dem vorliegenden Verfahren können dabei von entsprechenden Sensoren empfangen werden können. Die Positionsdaten können eine geographische Position des Fahrzeugs auf einer digitalen Karte repräsentieren. Dabei können die Positionsdaten zur Verwendung bei dem vorliegenden Verfahren von einem Navigationsgerät empfangen werden. Zusätzlich oder alternativ kann auch eine solche digitale Karte anhand des geschätzten Straßenverlaufs plausibilisiert werden. Eine solche Plausibilisierung bietet den Vorteil, dass der geschätzte Straßenverlauf mit noch höherer Genauigkeit einen tatsächlichen Straßenverlauf entsprechen kann.

Zudem kann ein Schritt des Bestimmens eines Objekttyps des zumindest einen Objekts unter Verwendung des zumindest einen erkannten Objekts und/oder der ermittelten Position des zumindest einen Objekts basierend auf dem Bild des Straßenabschnitts vorgesehen sein. Dabei kann im Schritt des Schätzens der Straßenverlauf zusätzlich unter Verwendung des bestimmten Objekttyps geschätzt werden. Wenn der Objekttyp des zumindest einen Objekts unter Verwendung des zumindest einen erkannten Objekts basierend auf dem Bild des Stra-ßenabschnitts wird, können der Schritt des Ermittelns und/oder der Schritt des Schätzens zusätzlich unter Verwendung des Objekttyps durchgeführt werden. Der Schritt des Bestimmens des Objekttyps kann eine Klassifizierung, Objekterkennung, Mustererkennung oder dergleichen basierend auf dem Bild des Stra-ßenabschnitts umfassen. Somit wird der Typ bzw. eine Art des zumindest einen Objekts genauer identifiziert. Eine solche Klassifizierung bietet den Vorteil, dass der Straßenverlauf zuverlässiger und korrekter geschätzt werden kann.

Die vorliegende Erfindung schafft ferner ein Verfahren zur Steuerung einer Lichtaussendung zumindest eines Scheinwerfers eines Fahrzeugs, wobei das Verfahren folgende Schritte aufweist:
Schätzen eines Straßenverlaufs in einem Straßenabschnitt in Fahrtrichtung vor dem Fahrzeug nach dem Verfahren zur Schätzung eines Straßenverlaufs; und
Erzeugen eines Ansteuersignals zur Steuerung der Lichtaussendung des zumindest einen Scheinwerfers unter Verwendung des geschätzten Straßenverlaufs.

Die Lichtaussendung des zumindest einen Scheinwerfers kann in Stufen oder stufenlos veränderbar sein. Die Lichtaussendung des zumindest einen Scheinwerfers kann durch eine Abstrahlcharakteristik des zumindest einen Scheinwerfers gekennzeichnet sein. Die Abstrahlcharakteristik kann eine Leuchtweite, einen Leuchtwinkel, eine Helligkeit und/oder dergleichen des zumindest einen Scheinwerfers aufweisen. Insbesondere kann bei der Steuerung der Lichtaussendung des zumindest einen Scheinwerfers eine Veränderung der Abstrahlcharakteristik, beispielsweise der Leuchtweite bzw. des Leuchtwinkels, des zumindest einen Scheinwerfers erfolgen. Das Ansteuersignal ist ausgebildet, um eine Veränderung der Lichtaussendung bzw. Abstrahlcharakteristik des zumindest einen Scheinwerfers zu bewirken. Dabei wird die Veränderung der Lichtaussendung beispielsweise dann bewirkt, wenn der Straßenverlauf eine Kurve aufweist. Das Verfahren kann ferner einen Schritt des Kombinierens des geschätzten Straßenverlaufs und einer aktuellen Fahrtrichtung des Fahrzeugs aufweisen, um einen Abweichungswert zu erzeugen. Im Schritt des Kombinierens kann beispielsweise ein Differenzbetrag zwischen dem geschätzten Straßenverlauf und der aktuellen Fahrtrichtung ermittelt werden. Der erzeugte Abweichungswert kann beispielsweise diesen Differenzbetrag repräsentieren. Somit kann das Ansteuersignal zusätzlich unter Verwendung des Abweichungswertes erzeugt werden. Die Lichtaussendung kann beispielsweise um den Abweichungswert verändert werden, um an den geschätzten Straßenverlauf angepasst zu werden. Der Abweichungswert kann in dem Ansteuersignal berücksichtigt sein und ist somit geeignet, um bei Verwendung bei der Ansteuerung des Scheinwerfers zu bewirken, dass die Lichtaussendung des zumindest einen Scheinwerfers an den geschätzten Straßenverlauf angepasst wird. Auch können in dem Schritt des Erzeugens ein erstes Ansteuersignal und ein zweites Ansteuersignal erzeugt werden. Dabei kann das erste Ansteuersignal beispielsweise dem oben genannten Ansteuersignal entsprechen. Das zweite Ansteuersignal kann beispielsweise basierend auf einer Spurerkennung oder dergleichen bestimmt worden sein. Das erste Ansteuersignal kann einer Schätzung des Straßenverlaufs in einem fahrzeugfernen Bereich entsprechen. Das zweite Ansteuersignal kann einer Schätzung des Straßenverlaufs in einem fahrzeugnahen Bereich entsprechen.

Die vorliegende Erfindung schafft ferner eine Vorrichtung, die ausgebildet ist, um die Schritte eines der oben genannten Verfahren durchzuführen bzw. umzusetzen. Insbesondere kann die Vorrichtung Einrichtungen aufweisen, die ausgebildet sind, um je einen Schritt eines der oben genannten Verfahren auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät bzw. Steuergerät verstanden werden, das Sensorsignale verarbeitet und in Abhängigkeit davon Steuersignale ausgibt. Die Vorrichtung kann eine Schnittstelle aufweisen, die hardwaremäßig und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung eines der oben genannten Verfahren verwendet wird, wenn das Programm auf einem Computer oder einer Vorrichtung ausgeführt wird.

Die Erfindung wird anhand der beigefügten Zeichnungen beispielhaft näher erläutert. Es zeigen:
- Fig. 1: eine schematische Darstellung eines Fahrzeugs mit einer Steuervorrichtung gemäß einem Ausführungsbeispiel der vorliegenden Erfindung;
- Figuren 2A und 2B: schematische Darstellungen erkannter Objekte und eines geschätzten Straßenverlaufs;
- Figuren 3A und 3B: Kamerabilder zur Verwendung bei einer Objekterkennung;
- Fig. 4: ein Ablaufdiagramm eines Verfahrens gemäß einem Ausführungsbeispiel der vorliegenden Erfindung; und
- Fig. 5: ein Ablaufdiagramm eines Verfahrens gemäß einem weiteren Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

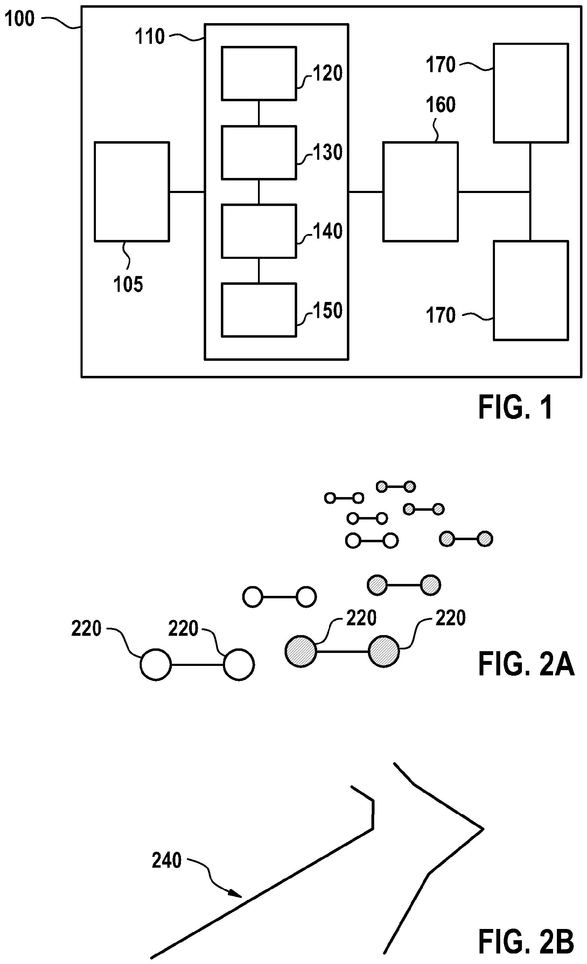

Fig. 1 zeigt eine schematische Darstellung eines Fahrzeugs 100 mit einer Steuervorrichtung gemäß einem Ausführungsbeispiel der vorliegenden Erfindung. Das Fahrzeug 100 weist eine Fahrzeugkamera 105, eine Steuervorrichtung 110 mit einer Erkennungseinrichtung 120, einer Ermittlungseinrichtung 130, eine Schätzungseinrichtung 140 sowie eine Erzeugungseinrichtung 150, ein Ansteuergerät 160 und zwei Scheinwerfer 170 auf. Die Fahrzeugkamera 105 ist mit der Steuervorrichtung 110 und das Ansteuergerät 160 ist mit der Steuervorrichtung 110, beispielsweise jeweils über zumindest eine Signalleitung, verbunden. Somit ist die Steuervorrichtung 110 zwischen die Fahrzeugkamera 105 und das Ansteuergerät 160 geschaltet. Die Scheinwerfer 170 sind mit dem Ansteuergerät 160 beispielsweise über zumindest eine Signalleitung verbunden. Somit ist das Ansteuergerät 160 zwischen die Steuervorrichtung 110 und die Scheinwerfer 170 geschaltet. Auch wenn es in Fig. 1 so nicht dargestellt ist, kann das Ansteuergerät 160 auch ein Teil der Steuervorrichtung 110 sein oder kann die Steuervorrichtung 110 auch ein Teil des Ansteuergerätes 160 sein.

Die Fahrzeugkamera 105 kann eine Bildverarbeitungselektronik aufweisen. Die Fahrzeugkamera 105 ist ausgebildet, um zumindest ein Bild eines Straßenabschnitts in Fahrtrichtung vor dem Fahrzeug aufzunehmen und in Form einer Bildinformation, von Bilddaten bzw. eines Bildsignals an die Steuervorrichtung 110 auszugeben.

Die Steuervorrichtung 110 weist die Erkennungseinrichtung 120, die Ermittlungseinrichtung 130, die Schätzungseinrichtung 140 sowie die Erzeugungseinrichtung 150 auf. Die Steuervorrichtung 110 ist ausgebildet, um eine Schätzung eines Straßenverlaufs in einem Straßenabschnitt in Fahrtrichtung vor dem Fahrzeug 100 sowie eine Steuerung einer Lichtaussendung der Scheinwerfer 170 des Fahrzeugs 100 durchzuführen.

Die Erkennungseinrichtung 120 ist ausgebildet, um die Bildinformation, die Bilddaten bzw. das Bildsignal von der Fahrzeugkamera 105 zu empfangen. Die Erkennungseinrichtung 120 ist ausgebildet, um basierend auf den von der Fahrzeugkamera 105 empfangenen Daten zumindest ein reflektierendes oder selbstleuchtendes Objekt in dem Bild des Straßenabschnitts zu erkennen. Die Erkennungseinrichtung erkennt 120 das zumindest eine Objekt aus der Bildinformation, den Bilddaten bzw. dem Bildsignal von der Fahrzeugkamera 105.

Dazu kann die Erkennungseinrichtung 120 geeignete Verfahren zur Bildverarbeitung, Bildanalyse, Mustererkennung, Objekterkennung und/oder dergleichen einsetzen. Die Erkennungseinrichtung 120 kann eine Information über das zumindest eine erkannte Objekt an die Ermittlungseinrichtung 130 ausgeben.

Die Ermittlungseinrichtung 130 ist ausgebildet, um die Information über das zumindest eine erkannte Objekt von der Erkennungseinrichtung 120 zu empfangen. Die Ermittlungseinrichtung 130 ist ausgebildet, um einer Position des zumindest einen erkannten Objekts basierend auf dem Bild des Straßenabschnitts bzw. der Bildinformation, den Bilddaten bzw. dem Bildsignal zu ermitteln. Dabei ist die Ermittlungseinrichtung 130 ausgebildet, um die Position des zumindest einen erkannten Objekts relativ zu einer aktuellen Ausrichtung oder Fahrtrichtung des Fahrzeugs zu bestimmen. Werden mehrere Objekte erkannt, so ist die Ermittlungseinrichtung 130 zusätzlich ausgebildet, um Positionen der Objekte relativ zueinander zu bestimmen. Die Ermittlungseinrichtung 130 ist ausgebildet, um eine Information über die ermittelte Position oder Positionen an die Schätzungseinrichtung 140 auszugeben.

Die Schätzungseinrichtung 140 ist ausgebildet, um die Information über die ermittelte Position oder die ermittelten Positionen von der Ermittlungseinrichtung 130 zu empfangen. Die Schätzungseinrichtung 140 ist auch ausgebildet, um den Straßenverlauf unter Verwendung der ermittelten Position des zumindest einen Objekts bzw. der Information über die ermittelte Position zu schätzen oder auf andere geeignete Art und Weise zu bestimmen. Sind Positionen der Objekte entlang einer aktuellen Fahrtrichtung des Fahrzeugs angeordnet, so deutet dies auf einen geradlinigen Straßenverlauf hin. Sind zumindest einige der Positionen der Objekte versetzt zu einer aktuellen Fahrtrichtung des Fahrzeugs angeordnet, so deutet dies auf eine Biegung des Straßenverlaufs hin. Eine Größe eines seitlichen Versatzes der Positionen im Bezug zur aktuellen Fahrtrichtung kann ein Maß für eine Stärke der Biegung des Straßenverlaufs sein.

Die Schätzungseinrichtung 140 ist ausgebildet, um eine Information über den geschätzten Straßenverlauf an die Erzeugungseinrichtung 150 auszugeben.

Die Erzeugungseinrichtung 150 ist ausgebildet, um die Information über den geschätzten Straßenverlauf von der Schätzungseinrichtung 140 zu empfangen. Die Erzeugungseinrichtung 150 ist ausgebildet, um ein Ansteuersignal zur Steuerung der Lichtaussendung des zumindest einen Scheinwerfers unter Verwendung des geschätzten Straßenverlaufs bzw. die Information über den geschätzten Straßenverlauf zu erzeugen.

Die Steuervorrichtung 110 ist ausgebildet, um das Ansteuersignal an das Ansteuergerät 160 auszugeben.

Das Ansteuergerät 160 ist ausgebildet, um das Ansteuersignal von der Steuervorrichtung 110 zu empfangen. Das Ansteuergerät 160 ist auch ausgebildet, um ein Steuersignal zur Steuerung der Scheinwerfer 170 zu erzeugen. Das Ansteuergerät 160 kann bei der Erzeugung des Steuersignals das Ansteuersignal von der Steuervorrichtung 110 berücksichtigen bzw. verwenden. Das Steuersignal kann somit das Ansteuersignal beinhalten. Das Ansteuergerät 160 ist ausgebildet, um das Steuersignal an die Scheinwerfer 170 auszugeben.

Die Scheinwerfer 170 können das Steuersignal über eine Schnittstelle von dem Ansteuergerät 160 empfangen. Das Ansteuersignal, das in dem Steuersignal berücksichtigt ist, kann bewirken, dass die Lichtaussendung an den geschätzten Straßenverlauf angepasst wird. Insbesondere kann dabei ein Kurvenlicht an eine mögliche Kurve in dem geschätzten Straßenverlauf angepasst werden.

Fig. 2A zeigt eine schematische Darstellung erkannter Objekte 220. Die Objekte 220 können beispielsweise mittels der Steuervorrichtung aus Fig. 1 erkannt worden sein und es sind deren Positionen ermittelt worden. Bei der links dargestellten Reihe von Objekten 220, von denen nur das vordere Paar mit Bezugszeichen versehen ist, kann es sich um Frontscheinwerfer handeln. Bei der rechts dargestellten Reihe von Objekten 220, von denen nur das vordere Paar mit Bezugszeichen versehen ist, kann es sich um die Scheinwerfer bzw. Rücklichter von Fahrzeugen handeln. Somit handelt es sich bei den Objekten 220 um selbstleuchtende Objekte. Die Scheinwerfer sind als kreisförmige Objekte 220 dargestellt. Jeweils zwei in Fig. 2A horizontal benachbarte Objekte 220 sind mit einer Linie verbunden und damit als zu einem einzigen Fahrzeug zugehörig gekennzeichnet. Helle kreisförmige Objekte 220 können hierbei Frontscheinwerfer repräsentieren. Dunkle kreisförmige Objekte 220 können Heckscheinwerfer repräsentieren. In Fig. 2A sind beispielhaft in der rechten Reihe fünf Paare von dunklen kreisförmigen Objekten 220, welche die Heckscheinwerfer von fünf vorausfahrenden Fahrzeugen auf einer Straße darstellen, sowie in der linken Reihe fünf Paare von hellen kreisförmigen Objekten 220, welche die Frontscheinwerfer von fünf entgegenkommenden Fahrzeugen auf einer Straße darstellen, gezeigt.

Eine in Fig. 2A dargestellte Größe der Objekte 220 nimmt von unten nach oben in der Figur ab. Dies entspricht einer zunehmenden Entfernung der Objekte 220 von unten nach oben in Fig. 2A. Ein einzelnes Paar von dunklen kreisförmigen Objekten 220 ist in Fig. 2A jeweils horizontal versetzt zu einem vertikal benachbarten Paar von dunklen kreisförmigen Objekten 220 gezeigt. Ein einzelnes Paar von hellen kreisförmigen Objekten 220 ist in Fig. 2A jeweils horizontal versetzt zu einem vertikal benachbarten Paar von hellen kreisförmigen Objekten 220 dargestellt. Die linke und die rechte Reihe der Objekte 220 weisen jeweils eine Krümmung nach links auf. Daraus kann auf eine Linkskurve der Straße geschlossen werden.

Fig. 2B zeigt eine schematische Darstellung eines geschätzten Straßenverlaufs 240. Der Straßenverlauf 240 ist schematisch in Gestalt beispielsweise zweier Seitenlinien einer Straße gezeigt. Der Straßenverlauf 240 kann beispielsweise mittels der Steuervorrichtung aus Fig. 1 geschätzt worden sein. Der Straßenverlauf 240 ist basierend auf den Objekten aus Fig. 2A geschätzt worden. Der Straßenverlauf 240 ergibt sich durch Verbinden von Paaren von Frontscheinwerfern und Verbinden von Paaren von Heckscheinwerfern bzw. Rücklichtern aus Fig. 2A. Um die Objekte 220 korrekt verbinden zu können, werden zunächst einander entsprechende Objekte 220 einander zugeordnet. Anschließend werden Positionen benachbarter der einander zugeordneten Objekte verbunden, um einen Positionsverlauf zu erhalten, der den Straßenverlauf abbildet.

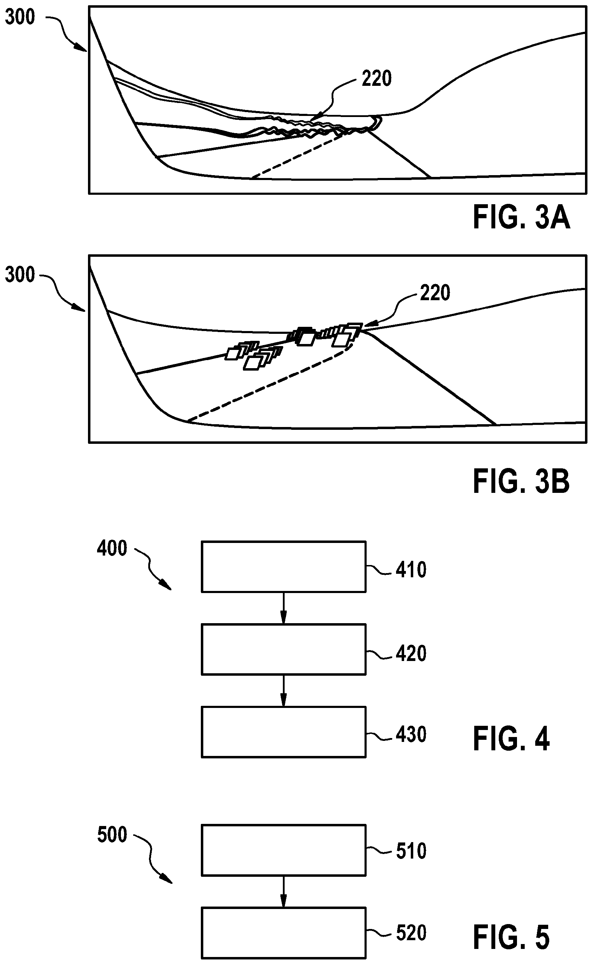

Fig. 3A zeigt ein Kamerabild 300 zur Verwendung bei einer Objekterkennung. Das Kamerabild 200 kann von der Steuervorrichtung aus Fig. 1 verwendet werden, um Objekte zu erkennen, einen Straßenverlauf zu schätzen und eine Lichtaussendung zumindest eines Scheinwerfers zu steuern. Bei dem Kamerabild 300 handelt es sich um eine Aufnahme mit Langzeitbelichtung, wobei selbstleuchtende Objekte 220 als helle Spuren in den Kamera Bild 300 erscheinen.

Fig. 3B zeigt ein Kamerabild 300 zur Verwendung bei einer Objekterkennung. Die Darstellung in Fig. 3B entspricht vom Prinzip her der Darstellung aus Fig. 3A und unterscheidet sich lediglich hinsichtlich der dargestellten Szene bzw. aufgenommenen Verkehrssituation. Wiederum sind eine Mehrzahl von Objekten zu erkennen, aus denen auf einen Verlauf der Straße geschlossen werden kann.

Basierend auf den Kamerabildern 300 aus den Figuren 3A und 3B kann der Straßenverlauf über eine Auswertung der Historie von selbstleuchtenden Objekten geschätzt werden. Die Historie in dem Kamerabild 300 ist hierbei über eine lange Belichtungszeit realisiert. Eine Nutzung einer Historie und/oder Bewegung von selbstleuchtenden Objekten bzw. Lichtobjekten zur Rekonstruktion des Straßenverlaufs ist somit möglich.

Im Folgenden werden zunächst die Hintergründe der vorliegenden Erfindung erörtert, bevor unter Bezugnahme auf die Figuren 1 bis 3 verschiedene Ausführungsbeispiele der vorliegenden Erfindung im Folgenden zusammenfassend erläutert werden.

Ein in einem Fahrzeug angeordnetes Assistenzsystem zur Spurerkennung ermöglicht das Erkennen der vor dem Fahrzeug liegenden Fahrspur. Eine Sichtweite der Spurerkennung ist für das Schwenken von Abblendlicht mit einer typischen geometrischen Reichweite von etwa 65m ausreichend, für das Schwenken von Fernlicht jedoch zu beschränkt. Der Spurverlauf bzw. die Spurerkennung wird vorwiegend für Spurhalteassistenten verwendet. Kamerasysteme drängen immer stärker in den Fahrzeugbereich auch im unteren Preissegment. Durch den entstehenden Preisdruck wird die Leistungsfähigkeit der Kamerasysteme angepasst. Wenn beispielsweise bis zu vier Mess-Algorithmen auf der Kamera Platz finden, werden bei den Kamerasystemen mit reduziertem Umfang weniger Mess-Algorithmen Platz finden, z. B. zwei. Wenn in einem Kamerasystem keine Spurhalteassistenz vorhanden ist, kann prinzipiell auf den Spurerkennungsalgorithmus verzichtet werden, z. B. sind dann nur Fernlichtassistenz und Schilder-Erkennung verbaut. Es kann zudem nicht davon ausgegangen werden, dass bei Fahrzeugen im mittleren und unteren Preissegment fest eingebaute Navigationssysteme vorhanden sind.

Gemäß einem Ausführungsbeispiel der vorliegenden Erfindung kann ein Straßenverlauf wie folgt geschätzt werden. Am Straßenrand stehen üblicherweise Leitpfosten, die mit Reflektoren 220 ausgestattet sind, die von Mess-Algorithmen, wie z. B. VDD, erkannt werden. Die Leitpfosten haben normalerweise einen Abstand von beispielsweise 50m, in Kurven und unübersichtlichen Stellen stehen sie enger beieinander. Die erkannten Reflektoren 220 können miteinander verbunden werden, um auf den Straßenverlauf 240 vor dem Fahrzeug 100 zu schließen. Vom Scheinwerferlicht angestrahlte Reflektoren 220 werden von Mess-Algorithmen wie VDD schon von weitem erkannt, wodurch eine höhere Sichtweite als bei der Spurerkennung möglich wird. Damit ist je nach Lichtverteilung eine größere Sichtweite möglich. Beispielsweise kann ein Kurvenlicht mit Fernlicht noch vorausschauender realisiert werden. Auf durchgehend beleuchteten Straßen, z. B. in der Stadt, können Straßenlaternen 220 genutzt werden, um den Straßenverlauf 240 abzuschätzen und das Kurvenlicht zu steuern. Man kann auch das Vorhandensein, die Position, Bewegung und Fahrtrichtung - ggf. über Lichterfarbe - anderer Verkehrsteilnehmer auswerten, um den Straßenverlauf 240 zu schätzen. Falls ein Navigationsgerät im Fahrzeug 100 verbaut ist, kann gemäß einem weiteren Ausführungsbeispiel der vorliegenden Erfindung über die erkannten Lichtobjekte 220 überprüft werden, ob das Kartenmaterial aktuell ist, oder umgekehrt. Durch Detektion von Signal-Lichtern 220 und Reflektoren 220 an Betonbegrenzungen beispielsweise, kann das Kurvenlicht auch in Baustellen genutzt werden und z. B. eine optische Führung des Fahrers ermöglichen.

Ein spurbasiertes Kurvenlichtsystem kann durch die zusätzliche Nutzung der Verfahren gemäß Ausführungsbeispielen der vorliegenden Erfindung eine bessere Vorausschau erreichen. Im Nahbereich können dann vorwiegend die Spurinformationen genutzt werden, der Verlauf im Fernbereich kann durch die Straßenrekonstruktion bzw. Straßenverlaufsschätzung gemäß Ausführungsbeispielen der vorliegenden Erfindung bestimmt werden. Durch Kopplung beider Mess-Algorithmen kann eine Ausfallrate des vorausschauenden Kurvenlichts reduziert werden. Stehen keine mittels Spurerkennung detektierte Spuren zur Verfügung, kann die Straßenverlaufsschätzung gemäß Ausführungsbeispielen der vorliegenden Erfindung zur Kurvenlichtsteuerung eingesetzt werden, beispielsweise über VDD. Stehen keine gemäß Ausführungsbeispielen der vorliegenden Erfindung erkannten Objekte bzw. VDD-Objekte zur Verfügung, kann die Spurerkennung zur Kurvenlichtsteuerung eingesetzt werden.

Die Messergebnisse von VDD umfassen alle reflektierenden und selbstleuchtenden Objekte bei Nacht wie z.B. andere Verkehrsteilnehmer, Reflektoren an Leitpfosten und/oder parkenden Fahrzeugen und Straßenlaternen. Vorteilhaft bei der Verwendung von Messdaten von VDD ist die hohe Reichweite, die bei selbstleuchtenden Objekten wie z.B. entgegenkommenden Fahrzeugen mehrere hundert Meter betragen kann.

Über andere vorausschauende Sensoren wie beispielsweise Radar- oder Lidar-Sensoren, die auf Laufzeitmessungen eines ausgesendeten Impulses beruhen, können beispielsweise erhabene Objekte wie beispielsweise Leitpfosten oder Leitplanken im Verkehrsraum erfasst werden. Die Reichweite günstiger Radar- oder Lidarsysteme liegt unterhalb des durchschnittlichen Erfassungsbereichs von VDD. Durch Nutzung von VDD Messergebnissen wird eine große Vorausschau erreicht.

Kurvenlichtsysteme können ebenfalls auf Spurinformationen aufgebaut werden, die aus Fahrbahnmarkierungen gewonnen werden. Im Gegensatz zu den VDD Messergebnissen können die Spuren auch bei Tage erkannt werden und beispielsweise für eine Spurverlassenswarnung genutzt werden. Nachteilig bei der Spurerkennung ist die begrenzte Vorausschau, die häufig kleiner als einhundert Meter sein kann.

Wenn durch die vorteilhafte Nutzung von VDD Messergebnissen zur Abschätzung des Spurverlaufs auf die Auswertung von weiteren Messdaten wie Spurmarkierungen verzichtet werden kann, ist es möglich den Sensor mit anschließender Auswertung weniger leistungsfähig auszulegen und so Systemkosten einzusparen. Durch niedrigere Systemkosten können sich Assistenzsysteme auch im unteren Fahrzeugpreissegment durchsetzen, wodurch die Sicherheit im gesamten Straßenverkehr erhöht werden kann.

Fig. 4 zeigt ein Ablaufdiagramm eines Verfahrens 400 zur Schätzung eines Straßenverlaufs in einem Straßenabschnitt in Fahrtrichtung vor einem Fahrzeug, gemäß einem Ausführungsbeispiel der vorliegenden Erfindung. Das Verfahren 400 weist einen Schritt des Erkennens 410 zumindest eines reflektierenden oder selbstleuchtenden Objekts in einem Bild des Straßenabschnitts auf. Das Verfahren 400 weist auch einen Schritt des Ermittelns 420 einer Position des zumindest einen Objekts basierend auf dem Bild des Straßenabschnitts auf. Das Verfahren 400 weist auch einen Schritt des Schätzens 430 des Straßenverlaufs unter Verwendung der ermittelten Position des zumindest einen Objekts auf. Das Verfahren 400 kann in Verbindung mit der Steuervorrichtung des Fahrzeugs aus Fig. 1 ausgeführt bzw. umgesetzt werden.

Fig. 5 zeigt ein Ablaufdiagramm eines Verfahrens 500 zur Steuerung einer Lichtaussendung zumindest eines Scheinwerfers eines Fahrzeugs, gemäß einem Ausführungsbeispiel der vorliegenden Erfindung. Das Verfahren 500 weist einen Schritt des Schätzens 510 eines Straßenverlaufs in einem Straßenabschnitt in Fahrtrichtung vor dem Fahrzeug auf. Der Schritt des Schätzens 510 kann dabei Teilschritte aufweisen, die den Schritten des Verfahrens zur Schätzung eines Straßenverlaufs in einem Straßenabschnitt in Fahrtrichtung vor einem Fahrzeug aus Fig. 4 entsprechen. Das Verfahren 500 weist zudem einen Schritt des Erzeugens 520 eines Ansteuersignals zur Steuerung der Lichtaussendung des zumindest einen Scheinwerfers unter Verwendung des geschätzten Straßenverlaufs auf. Das Verfahren 500 kann in Verbindung mit der Steuervorrichtung des Fahrzeugs aus Fig. 1 ausgeführt bzw. umgesetzt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Computer implementiertes Verfahren (400) zur Schätzung eines Straßenverlaufs (240) in einem Straßenabschnitt in Fahrtrichtung vor einem Fahrzeug (100), wobei das Verfahren (400) folgende Schritte aufweist:
Erkennen (410) von Frontscheinwerfern (220) und/oder Heckleuchten (220) anderer Verkehrsteilnehmer in einem Bild (300) des Straßenabschnitts unter Einsatz einer Objekterkennung oder einer Mustererkennung, wobei Helligkeitswerte in dem Bild (300) ausgewertet werden und Bildbereiche mit Helligkeitswerten über einem definierbaren Schwellenwert als Frontscheinwerfer (220) und/oder Heckleuchten (220) erkannt werden;
Ermitteln (420) von Positionen der Frontscheinwerfer (220) und/oder Heckleuchten (220) basierend auf dem Bild (300) des Straßenabschnitts relativ zueinander und/oder relativ zu einer aktuellen Ausrichtung oder Fahrtrichtung des Fahrzeugs (100), wobei von der Position in dem Bild (300) eine reale Position relativ zu dem Fahrzeug (100) hergeleitet wird; und
Bestimmen (430) des Straßenverlaufs in einem Straßenabschnitt in Fahrtrichtung vor dem Fahrzeug (240) unter Verwendung der ermittelten Positionen der Frontscheinwerfer (220) und/oder Heckleuchten (220) durch horizontales Verbinden
der ermittelten Positionen von als zu einem einzigen Fahrzeug zugehörigen Paaren von Frontscheinwerfern (220) und/oder Heckleuchten (220), wobei einander entsprechende Frontscheinwerfer (220) und/oder Heckleuchten (220) einander zugeordnet werden, um die Paare zu bilden, wobei Positionen benachbarter der einander zugeordneten Frontscheinwerfer (220) und/oder Heckleuchten (220) verbunden werden, um einen Positionsverlauf zu erhalten, der den Straßenverlauf (240) abbildet.

2. Verfahren (400) gemäß einem der vorangegangenen Ansprüche, bei dem im Schritt des Erkennens (410) die Frontscheinwerfer (220) und/oder Heckleuchten (220) anderer Verkehrsteilnehmer in einer Mehrzahl von Bildern (300) des Straßenabschnitts erkannt werden, im Schritt des Ermittelns (420) ein Verlauf von Positionen der Frontscheinwerfer (220) und/oder Heckleuchten (220) basierend auf der Mehrzahl von Bildern (300) des Straßenabschnitts ermittelt wird und im Schritt des Schätzens (430) der Straßenverlauf (240) unter Verwendung des ermittelten Verlaufs der Positionen der Frontscheinwerfer (220) und/oder Heckleuchten (220) geschätzt wird.

3. Verfahren (400) gemäß einem der vorangegangenen Ansprüche, bei dem im Schritt des Ermitteins (420) ein sich aufgrund einer Belichtungszeit des Bildes (300) ergebender Verlauf von Positionen der Frontscheinwerfer (220) und/oder Heckleuchten (220) basierend auf dem Bild (300) des Straßenabschnitts ermittelt wird und im Schritt des Schätzens (430) der Straßenverlauf (240) unter Verwendung des ermittelten Verlaufs der Positionen der Paare von Frontscheinwerfern (220) und/oder Heckleuchten (220) geschätzt wird.

4. Verfahren (400) gemäß einem der vorangegangenen Ansprüche, mit einem Schritt des Kombinierens des geschätzten Straßenverlaufs (240) mit Fahrtdaten und/oder Positionsdaten des Fahrzeugs (100).

5. Verfahren gemäß einem der vorangegangenen Ansprüche, mit einem Schritt des Kombinierens des geschätzten Straßenverlaufs (240) mit einem erfassten Verlauf einer Spurmarkierung des Straßenabschnitts.

6. Verfahren (500) zur Steuerung einer Lichtaussendung zumindest eines Scheinwerfers (170) eines Fahrzeugs (100), wobei das Verfahren (500) folgende Schritte aufweist:
Schätzen (510) eines Straßenverlaufs (240) in einem Straßenabschnitt in Fahrtrichtung vor dem Fahrzeug (100) nach dem Verfahren (400) gemäß einem der Ansprüche 1 bis 5; und
Erzeugen (520) eines Ansteuersignals zur Steuerung der Lichtaussendung des zumindest einen Scheinwerfers (170) unter Verwendung des geschätzten Straßenverlaufs (220).

7. Vorrichtung (110), die ausgebildet ist, um die Schritte eines Verfahrens (400; 500) gemäß einem der Ansprüche 1 bis 6 durchzuführen.

8. Computer-Programmprodukt mit Programmcode zur Durchführung eines Verfahrens (400; 500) nach einem der Ansprüche 1 bis 6, wenn das Programm auf einer Vorrichtung (110) ausgeführt wird.

## Claims

1. Computer-implemented method (400) for estimating a road profile (240) in a road section in the driving direction in front of a vehicle (100), wherein the method (400) includes the following steps:
recognizing (410) front headlights (220) and/or taillights (220) of other road users in an image (300) of the road section by using object recognition or pattern recognition, wherein brightness values in the image (300) are evaluated and image regions having brightness values above a definable threshold value are recognized as front headlights (220) and/or taillights (220) ;
ascertaining (420) positions of the front headlights (220) and/or taillights (220) based on the image (300) of the road section relative to one another and/or relative to a current alignment or driving direction of the vehicle (100), wherein a real position relative to the vehicle (100) is derived from the position in the image (300); and
determining (430) the road profile in a road section in the driving direction in front of the vehicle (240) by using the ascertained positions of the front headlights (220) and/or taillights (220) by horizontally connecting the ascertained positions of pairs of front headlights (220) and/or taillights (220) as belonging to a single vehicle, wherein mutually corresponding front headlights (220) and/or taillights (220) are assigned to one another in order to form the pairs, wherein positions of adjacent ones of the mutually assigned front headlights (220) and/or taillights (220) are connected in order to obtain a position profile that maps the road profile (240).

2. Method (400) according to the preceding claim, wherein in the recognizing step (410) the front headlights (220) and/or taillights (220) of other road users are recognized in a plurality of images (300) of the road section, in the ascertaining step (420) a profile of positions of the front headlights (220) and/or taillights (220) is ascertained on the basis of the plurality of images (300) of the road section, and in the estimating step (430) the road profile (240) is estimated by using the ascertained profile of the positions of the front headlights (220) and/or taillights (220).

3. Method (400) according to either of the preceding claims, wherein in the ascertaining step (420) a profile of positions of the front headlights (220) and/or taillights (220), resulting from an exposure time of the image (300), is ascertained based on the image (300) of the road section, and in the estimating step (430) the road profile (240) is estimated by using the ascertained profile of the positions of the pairs of front headlights (220) and/or taillights (220).

4. Method (400) according to one of the preceding claims, having a step of combining the estimated road profile (240) with driving data and/or position data of the vehicle (100).

5. Method according to one of the preceding claims, having a step of combining the estimated road profile (240) with a captured profile of a lane marking of the road section.

6. Method (500) for controlling an emission of light from at least one headlight (170) of a vehicle (100), wherein the method (500) includes the following steps:
estimating (510) a road profile (240) in a road section in the driving direction in front of the vehicle (100) according to the method (400) according to one of Claims 1 to 5; and
generating (520) a control signal for controlling the emission of light from the at least one headlight (170) using the estimated road profile (220).

7. Apparatus (110) configured to carry out the steps of a method (400; 500) according to one of Claims 1 to 6.

8. Computer program product having program code for carrying out a method (400; 500) according to one of Claims 1 to 6 when the program is executed on an apparatus (110) .

## Revendications

1. Procédé mis en œuvre par ordinateur (400), permettant d'estimer un tracé de route (240) sur un tronçon de route dans le sens de la marche devant un véhicule (100), le procédé (400) présentant les étapes suivantes consistant à :
reconnaître (410) des phares avant (220) et/ou des feux arrière (220) d'autres usagers de la route sur une image (300) du tronçon de route en utilisant une reconnaissance d'objet ou une reconnaissance de motif, des valeurs de luminosité sur l'image (300) étant évaluées, et des zones d'image ayant des valeurs de luminosité supérieures à une valeur seuil définissable étant reconnues comme des phares avant (220) et/ou des feux arrière (220) ;
établir (420) des positions des phares avant (220) et/ou des feux arrière (220) sur la base de l'image (300) du tronçon de route les unes par rapport aux autres et/ou par rapport à une orientation actuelle ou un sens de la marche actuel du véhicule (100), une position réelle par rapport au véhicule (100) étant dérivée de la position sur l'image (300) ; et
déterminer (430) le tracé de route sur un tronçon de route dans le sens de la marche devant le véhicule (240) en utilisant les positions établies des phares avant (220) et/ou des feux arrière (220) en reliant horizontalement les positions établies de paires de phares avant (220) et/ou de feux arrière (220) associées à un seul véhicule, des phares avant (220) et/ou des feux arrière (220) correspondant les uns aux autres étant attribués les uns aux autres pour former les paires, les positions d'éléments voisins parmi les phares avant (220) et/ou les feux arrière (220) attribués les uns aux autres étant reliées pour obtenir un tracé de positions qui représente le tracé de route (240) .

2. Procédé (400) selon l'une quelconque des revendications précédentes, dans lequel, à l'étape de reconnaissance (410), les phares avant (220) et/ou les feux arrière (220) d'autres usagers de la route sont reconnus sur une pluralité d'images (300) du tronçon de route, à l'étape d'établissement (420), un tracé de positions des phares avant (220) et/ou des feux arrière (220) est établi sur la base de la pluralité d'images (300) du tronçon de route, et à l'étape d'estimation (430), le tracé de route (240) est estimé en utilisant le tracé établi des positions des phares avant (220) et/ou des feux arrière (220).

3. Procédé (400) selon l'une quelconque des revendications précédentes, dans lequel, à l'étape d'établissement (420), un tracé de positions des phares avant (220) et/ou des feux arrière (220), résultant du temps d'exposition de l'image (300), est établi sur la base de l'image (300) du tronçon de route, et à l'étape d'estimation (430), le tracé de route (240) est estimé en utilisant le tracé établi des positions des paires de phares avant (220) et/ou de feux arrière (220).

4. Procédé (400) selon l'une quelconque des revendications précédentes, comprenant une étape consistant à combiner le tracé de route (240) estimé avec des données de trajet et/ou des données de position du véhicule (100).

5. Procédé selon l'une quelconque des revendications précédentes, comprenant une étape consistant à combiner le tracé de route (240) estimé avec un tracé détecté d'un marquage au sol du tronçon de route.

6. Procédé (500) permettant de réguler une émission de lumière d'au moins un phare (170) d'un véhicule (100), le procédé (500) présentant les étapes suivantes consistant à :
estimer (510) un tracé de route (240) sur un tronçon de route dans le sens de la marche devant le véhicule (100) selon le procédé (400) selon l'une quelconque des revendications 1 à 5 ; et
produire (520) un signal de pilotage pour réguler l'émission de lumière de l'au moins un phare (170) en utilisant le tracé de route (220) estimé.

7. Dispositif (110) qui est réalisé pour exécuter les étapes d'un procédé (400 ; 500) selon l'une quelconque des revendications 1 à 6.

8. Produit de programme informatique comprenant du code programme pour l'exécution d'un procédé (400 ; 500) selon l'une quelconque des revendications 1 à 6, si le programme est exécuté sur un dispositif (110).
